# EUROPEAN PATENT SPECIFICATION

(11) **EP 0 623 673 B1**
(45) Date of publication and mention of the grant of the patent: **16.10.2002**
(21) Application number: 94104885.2
(22) Date of filing: 28.03.1994
(51) Int. Cl.: C12N 15/00, F16K 7/16, F16K 31/53, F16K 31/04, H02P 7/285

(54) **Valve arrangement**
ventilanordnung
Dispositif de robinet

(30) Priority: 02.04.1993 IL 10527793; 29.10.1993 IL 10744793
(43) Date of publication of application: 09.11.1994
(73) Proprietor: ARAN ENGINEERING DEVELOPMENT Ltd, Kfar Shemaryahu 46910 (IL); Netafim (A.C.S.) LTD., Tel-Aviv 67892 (IL)
(72) Inventor: Zakai, Avi, Rishon-LeZion 75246 (IL); Katzman, Youval, Zichron Yaacov 30900 (IL)
(74) Representative: VOSSIUS & PARTNER

(56) References cited:
- DE-A- 1 813 167
- FR-A- 511 989
- FR-A- 999 792
- US-A- 1 933 713
- US-A- 3 368 413
- US-A- 3 646 958
- US-A- 4 729 544
- US-A- 5 161 420

## Description

### FIELD OF THE INVENTION

This invention relates to electrical valve arrangements such as are used, for instance, in automatic sprinklers and the like.

### BACKGROUND OF THE INVENTION

Electrical valves such as are connected in the water inlet feed of a garden sprinkler are typically solenoid operated. Such valves include a sealing means which is opened by a linear armature which itself is actuated by a solenoid. Such valves are supplied normally closed: the closure itself being effected by means of a spring mechanism. Thus, in effect, the force of the solenoid overcomes the spring bias in order to open the valve.

A disadvantage with such valves, as is known, is that in order to maintain the valve in an open state, electrical energy must be constantly supplied for actuating the solenoid.

Electrical valves are also known wherein the solenoid is replaced by a conventional electrical motor. A major advantage of using an electrical motor over the use of the solenoid is that power need be supplied to the motor only in order to open and close the valve: there being no need to supply current to the motor once an equilibrium position of the valve has been achieved. Notwithstanding the obvious advantages of using a motor-operated valve over a solenoid-operated valve, there exists a difficulty in conforming such motor-operated valves to existing installations. Specifically, installations which assume the use of solenoid-operated valves are so constructed that energy is provided only in order to open the valve and to maintain it in the open state, whereupon disconnecting the power supply causes the valve to return to the closed position under the influence of the spring bias.

Regardless as to whether the operating mechanism is solenoid or motor operated, such valves are typically provided with a fluid inlet passage extending into a recess within which there is provided an "O" ring, whereby, when a closure member in the form of a rod is inserted into the "O" ring, the fluid inlet passage is sealed, thereby closing the valve. Such an arrangement represents a conventional piston-type valve which is characterized by the fact that the force acting on the piston head is exactly equal to the area of the piston multiplied by the pressure of the fluid acting thereon. This is distinct from diaphragm-type valves which, when open, are subjected to a greater force than the closure force, owing to the increased area upon which the fluid pressure is exerted. The additional area is an inevitable consequence of the need to provide for buckling of the diaphragm, thereby requiring that the area of the diaphragm extends beyond the area of the fluid inlet passage which is to be sealed.

This having been said, there are disadvantages associated with piston valves. First, the closure force must take into account frictional forces between the piston rod and the "O" ring and is therefore always somewhat greater than the theoretical minimum described above. Secondly, in time, owing to wear and tear, the piston rod abrades the inside surface of the "O" ring, thereby causing the valve to leak.

Such leakage is, of course, avoided in diaphragm valves, as are also the frictional forces. On the other hand, the additional surface area of the diaphragm, thereby requiring an increased enclosure force, is sufficiently disadvantageous to militate against their use in preference to piston-type valves, notwithstanding the disadvantages of the latter.

It would clearly be desirable somehow to overcome the sole disadvantage associated with diaphragm valves whereby the maximum closure force would be equal to the fluid pressure multiplied by the area of the fluid inlet, whilst enjoying all the other advantages associated with diaphragm valves over piston-type equivalents.

In diaphragm valves, the diaphragm itself is disposed between the fluid inlet to be sealed and a closure member having a surface area greater than that of the inlet passage. The valve is closed by forcing the closure member against the diaphragm, so as to distort the diaphragm on to the fluid inlet, thereby sealing the valve. If the closure member is operated via an electrical motor, then one way to apply sufficient force to the closure member would be to employ a correspondingly powerful motor. However, it is usually a requirement to miniaturize, as much as possible, the motor in order to reduce the valve size, as well as its cost. Miniature motors are usually incompatible with the requirement to provide a high closure force. Therefore, a transmission mechanism must be employed in order to increase the effective motor force. However, this can only be done at the expense of increasing the velocity ratio of the mechanism, thereby resulting in slow operation of the valve. During the time which is thus taken for the valve to close, fluid leakage occurs and this is unsatisfactory.

Such a diaphragm valve is, for example, disclosed in FR-A-511989 wherein the displacement of a membrane into a first sealing position and its retention therein and the subsequent release of the membrane from this first sealing position and its displacement into a second sealing position and its retention therein, requires significant power expenditure.

### SUMMARY OF THE INVENTION

It is an object to provide a valve arrangement in which the drawbacks associated with hitherto-proposed valves are substantially reduced or eliminated.

It is a further object of the invention to provide such a valve arrangement which is motor-operated and which can be substituted for existing solenoid-operated valves in installations constructed therefor.

According to the invention, there is provided a valve arrangement comprising:
a valve casing;
first and second ports formed in said casing;
first and second valve seatings of said first and second ports;
a flexible diaphragm;
a first diaphragm surface juxtaposed with respect to said valve seatings;
a second and opposite diaphragm surface;
a closure member mounted in said casing;
first and second actuator elements of said closure members juxtaposed with respect to said second diaphragm surface and being displaceable into first and second positions so as to bear alternately against said second diaphragm surface thereby alternately depressing spaced apart first and second portions of said first diaphragm surface into respective, sealing engagement with said valve seatings thereby alternately sealing off said first and second ports from a fluid flow zone; and
operating drive means operatively coupled to said closure member so as, alternately, to pivotally displace said actuator elements from one to another of said first and second positions so as, alternately, to effect communication between said fluid flow zone and said first and second ports;
and said first diaphragm surface defines with said casing wall said fluid flow zone, said displacement of said actuator elements alternately effecting communicaiton between said fluid flow zone and said first and second ports;
characterized in that said closure member is pivotally mounted in said casing, the valve arrangement being such that fluid pressure in said fluid flow zone acts on said first diaphragm surface in a direction tending to assist said pivotal displacement of said actuator elements.

Thus, with the valve arrangement in accordance with the invention and, as distinguished from the prior art, the provision of a fluid flow zone between the casing wall and the adjacent diaphragm surface ensures that the fluid pressure developed thereon is effective in assisting the displacement of the actuator elements into, and their retention in, sealing positions. In this way the power requirements for the operating drive means are substantially reduced.

Preferably, the operating means includes an electric motor coupled to the closure member via a transmission system comprising a pair of gear wheels, such that several rotations of the electric motor are required in order to operate the closure member. The speed of operation of the valve is increased by arranging for the transmission system to apply an impulse to the closure member, whenever it is desired to change the state of the valve from open to closed, or *vice versa*.

Preferably, the motor is operated by a source of d.c. power and is coupled to the closure member and is responsive to a first polarity voltage pulse for urging the closure member into the first position and is responsive to a second polarity voltage pulse for urging the closure member into the second position. A switching circuit is connected to the motor for decoupling the electrical d.c. motor from the source of d.c. electrical power only when it is required to urge the closure member from the second position to the first position.

### BRIEF DESCRIPTION OF THE DRAWINGS

In order to understand the invention and to see how the same may be carried out in practice, a preferred embodiment will now be described, by way of non-limiting example only, with reference to the accompanying drawings, in which:
Fig. 1 shows schematically, for the purpose of understanding the invention, a detail of a valve wherein fluid flows in a first direction;
Fig. 2 shows schematically, for the purpose of understanding the invention, a detail of a valve wherein fluid flows in a second direction;
Fig. 3 shows a partial sectional elevation of a valve according to the invention, having a motor-operated closure member;
Fig. 4 is a perspective view of the arrangement shown in Fig. 3;
Fig. 5a, 5b and 5c show a detail of the closure member illustrated in Fig. 3;
Fig. 6 shows a further detail of the closure member illustrated in Fig. 3; and
Fig. 7 shows schematically, for the purpose of understanding the invention, a detail of an alternative embodiment of a valve employing an unbalanced closure member;
Fig. 8 is a schematic diagram of a switching circuit for use with the valve shown in Figs. 3, 4, 5 or 6 in accordance with a first embodiment;
Fig. 9 is a schematic diagram of a switching circuit for use with the valve shown in Figs. 3, 4, 5 or 6 in accordance with a second embodiment;
Fig. 10 is a schematic diagram of a switching circuit for use with the valve shown in Figs. 3, 4, 5 or 6 in accordance with a third embodiment; and
Fig. 11 is a schematic diagram of a switching circuit for use with the valve shown in Figs. 3, 4, 5 or 6 according to a fourth embodiment.

### DETAILED DESCRIPTION OF PREFERRED EMBODIMENT

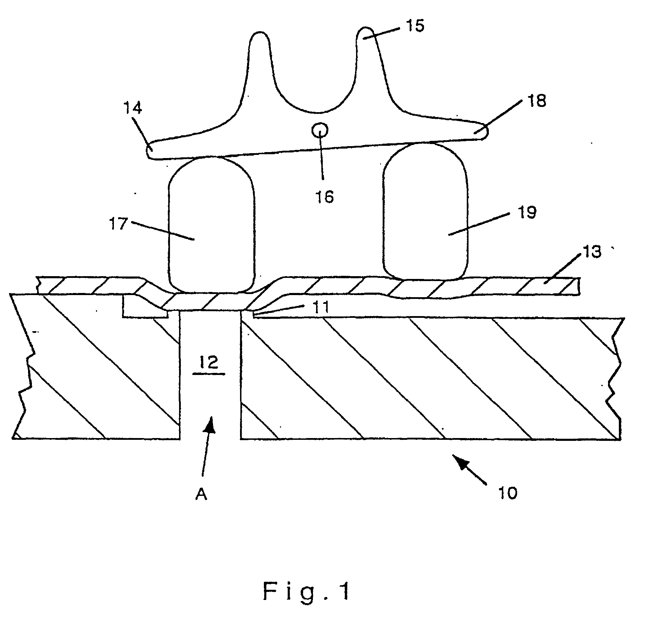

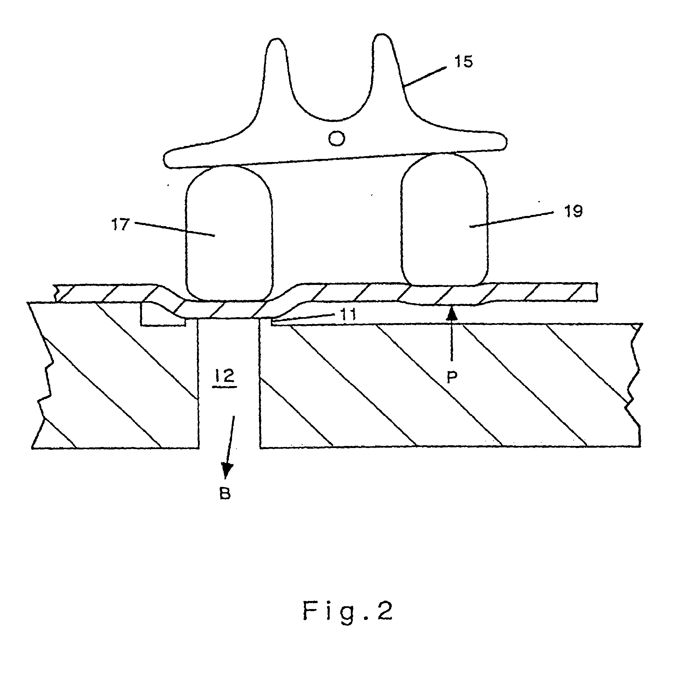

Referring to Figs 1 and 2, there is shown schematically for the purpose of understanding the invention, a valve depicted generally as 10, having a valve seating 11 depending from which is a fluid inlet 12 into which fluid flows in a first direction depicted by arrow A (Fig. 1) or in a second direction depicted by arrows B (Fig. 2). A flexible rubber diaphragm 13 is disposed above the valve seating 11 and is acted upon within an area of the fluid inlet 12 by a first end 14 of a closure member 15, which is free to rotate about a pivot axis 16 thereof.

The first end 14 of the closure member 15 contacts the diaphragm 13 via a first actuator 17 whilst second end 18 of the closure member 15 opposite the first end 14 thereof contacts the diaphragm 13 via a second actuator 19. The closure member 15 is balanced in that the pivot axis 16 is equidistant from the first and second ends 14 and 18, respectively.

In either of the two situations depicted in Figs. 1 and 2, when the first actuator 17 acts upon the diaphragm 13 with sufficient force to seal the fluid inlet 12, the maximum closure force is close to the fluid pressure **P** multiplied by the cross-sectional area **A** of the fluid inlet 12. Thus, specifically, in the situation shown in Fig. 1, when the valve is sealed, fluid acts upwards in the direction of arrow **A** so that the force acting on the underside of the diaphragm 13 is equal to **P.A.** This, then, is the closure force which must be applied by the closure member 15 in order to close the valve.

On the other hand, in the situation shown in Fig. 2, when the valve is sealed, no fluid flows through the fluid inlet 12 and the pressure therefore acting on the underside of the diaphragm 13 within the area **A** of the fluid inlet 12 is zero. However, a pressure **P** still acts on the remaining area of the diaphragm 13, and impinges against a distorted area thereof within the vicinity of the valve seating 11, thereby tending to lift the diaphragm 13 from the valve seating 11. At the same time, the pressure **P** is applied to the second actuator 19 which exerts a force against the second end 18 of the closure member 15. This more than counteracts the tendency for the closure member 15 to lift from the valve seating 11 owing to the fact that the area of the second actuator 19 to which the pressure **P** is applied exceeds that of the distorted area 17 of the diaphragm. Thus the opening force which must be applied against the closure member 15 in order to open the valve 10 is still very nearly equal to **P.A.**

The arrangement shown in Figs. 1 and 2, therefore, provides for the use of a diaphragm valve wherein the closure force is proportional to the cross-sectional area of the inlet passage (as is the case for piston valves) as opposed to an enlarged area of the diaphragm, as is the case in hitherto-proposed valves employing diaphragms. On the other hand, since a diaphragm is employed, frictional forces and cylinder abrasion, typically associated with piston valves, are avoided.

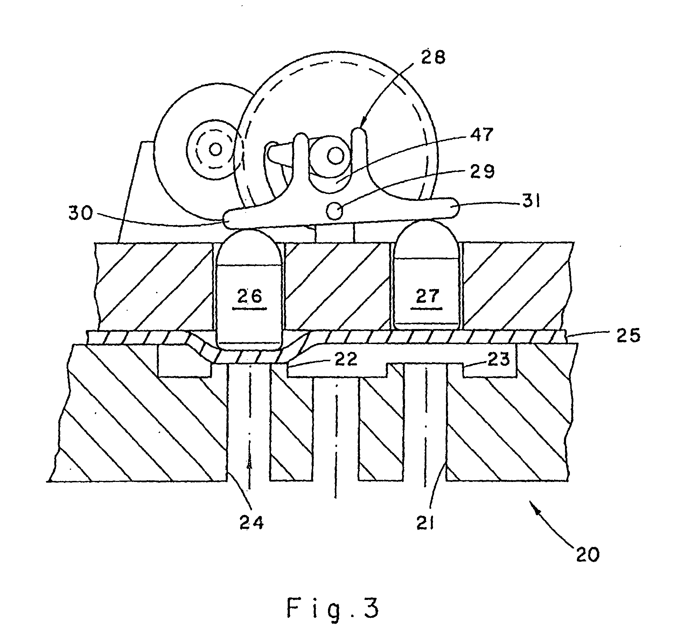

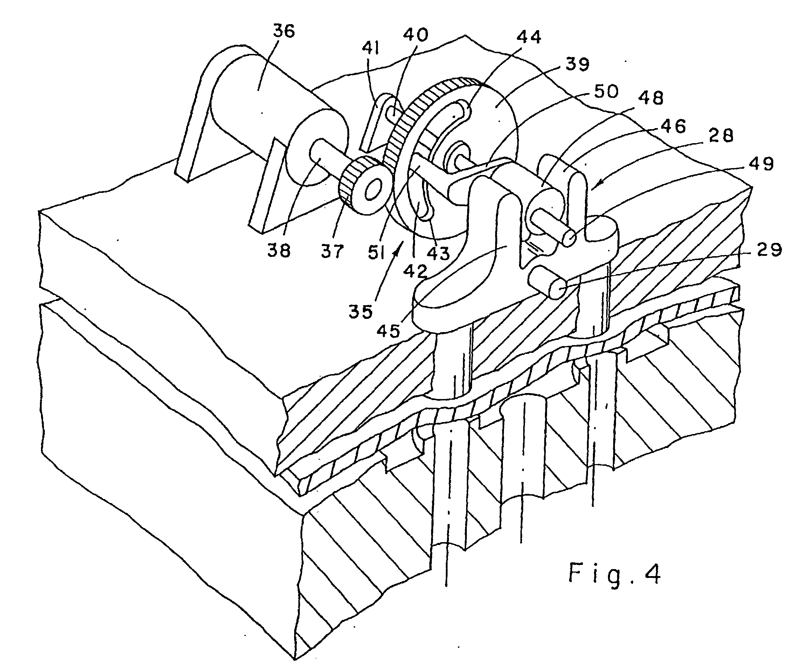

Figs. 3 and 4 show sectional and perspective views of a changeover valve 20 according to the invention, having first and second fluid inlets 24 and 21 depending from corresponding valve seatings 22 and 23.

Disposed above the valve seatings 22 and 23 is a flexible diaphragm 25 operated on within corresponding areas of the fluid inlets 24 and 21 by respective actuators 26 and 27 which are reciprocally depressed by a balanced closure member 28 free to perform limited rotation about a pivot axis 29 thereof.

In the situation shown in Fig. 3, a first end 30 of the closure member 28 pushes the actuator 26 against the diaphragm 25, thereby distorting the diaphragm 25 so that it covers the valve seating 22 and seals the fluid inlet 24. Whilst this obtains, the diaphragm 25 is clear of the valve seating 23, thereby allowing fluid to flow through the inlet passage 21 into the valve (or *vice versa*).

On the other hand, when the closure member 28 is rotated about its pivot axis 29 in a clockwise direction, the pressure of the fluid in the fluid inlet 24, acting on the underside of the diaphragm 25 and hence on the actuator 26, allows the diaphragm 25 to lift off the valve seating 22, thereby allowing fluid to flow once more through the fluid inlet passage 24. As the closure member 28 is rotated further, the second end 31 thereof forces the actuator 27 against the diaphragm 25 in the vicinity of the valve seating 23, so as to seal the second inlet passage 21.

Referring to Fig. 4 of the drawings, there is shown a detail of a transmission system depicted generally as 35, for coupling an electric motor 36 to the closure member 28 so as to rotate the closure member 28 about its pivot axis 29. The transmission system 35 comprises a small diameter gear wheel 37 mounted on a shaft 38 of the motor 36, for engaging a relatively large gear wheel 39 adapted for rotation about a central pivot axis 40 supported between end bearings 41 (only one of which is visible in the figure).

The gear wheel 39 is provided in a periphery thereof with an arcuate slot 42 having opposing ends 43 and 44. The closure member 28 is provided on either side of the pivot axis 29 with an upwardly depending armature 45 and 46 defining therebetween a substantially U-shaped hollow 47 in which there is disposed a cylindrical boss 48 eccentrically mounted on a first end 49 of a crank 50, having a second end 51 disposed within the arcuate slot 42.

Consequently, as the gear wheel 39 rotates, one end 43 or 44 of the arcuate slot 42 (depending on the direction of rotation of the gear wheel 39) impinges on the second end 51 of the crank 50, thereby rotating the crank and with it the cylindrical boss 48. Owing to the eccentric rotation 48 of the latter, there is imposed a lateral force on the inside surface of one of the armatures 45 or 46, thereby rotating the closure member 28 about its pivot axis 29.

Upon completion of a closing or opening operation, the corresponding end 43 or 44 of the arcuate slot 42 remains in contact with the second end 51 of the crank 50. The state of the valve may now be altered by rotating the motor shaft 38 in the opposite direction. During an initial rotation of the motor shaft 38, the gear wheel 39 will start to rotate at relatively slow speed (compared with the rate of rotation of the motor shaft 38) but at high torque owing to the gear ratio between the two gear wheels 37 and 39, there being no force imposed upon the second end 51 of the crank 50 until the remote end of the arcuate slot 42 contacts the second end 51 of the crank 50 on its opposite side. By the time this happens, the motor 36 will have reached full speed and a significant kinetic energy will be applied to the gear wheel 39. Consequently, an impulse is applied to the crank 50, causing it to rotate very quickly and nearly instantaneously to change the state of the closure member 28.

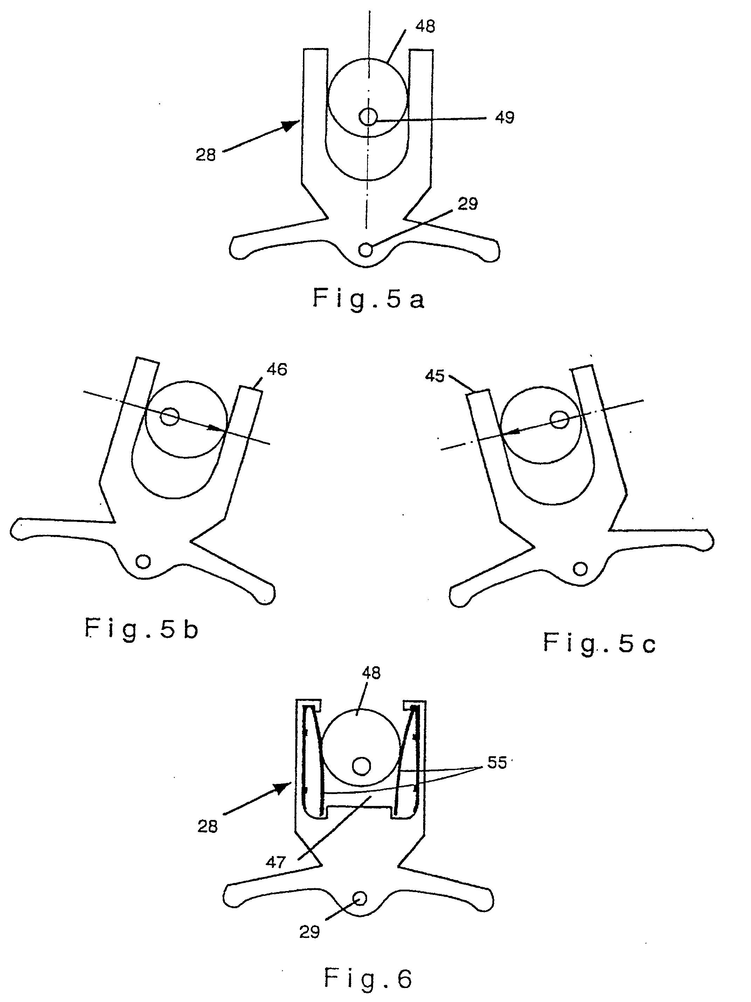

Figs. 5a, 5b and 5c show schematically a detail of the closure member 28 when the valve 20 illustrated in Figs. 3 and 4 is in an intermediate, open and closed position, respectively. In the intermediate position shown in Fig. 5a, the axis joining the center of the cylindrical boss 48 to the first end 49 of the crank 50 passes through the pivot axis 29 of the closure member 28. In this situation, any natural tendency for the closure member 28 to rotate in either direction, imparts a turning moment to the closure member 28 since the turning axis of the closure member 28, corresponding to the first end 49 of the crank, is displaced from the point of contact of the armatures 45 and 46 of the closure member 28.

In the open position shown in Fig. 5b, the armature 46 imparts a force to the cylindrical boss 48 passing through the first end 49 of the crank 50. Likewise, in the closed position shown in Fig. 5c, the armature 45 imparts a force to the cylindrical boss 48 passing through the first end 49 of the crank 50. In either of these situations, any tendency for the closure member 28 to counter rotate so as to close or open the valve 10, respectively, is prevented because the only force acting on the cylindrical boss 48 acts through the first end 49 of the crank about which the cylindrical boss rotates.

Referring now to Fig. 6, it is seen that the closure member 28 further includes a pair of resiliently biased leaf spring members 55 within the U-shaped hollow 47 such that an initial rotation of the motor depresses the cylindrical boss 48 against one of the leaf spring members 55 thereby rotating the closure member 28 into the first or second position. Continued rotation of the motor causes the cylindrical boss 48 to depress the leaf spring member 55 whilst not imparting any further rotation to the closure member 28. In such an arrangement, the closure member 28 is at least partially formed of molded plastics, the leaf springs 55 being also formed of plastics and riveted to respective internal surfaces of the armatures 45 and 46.

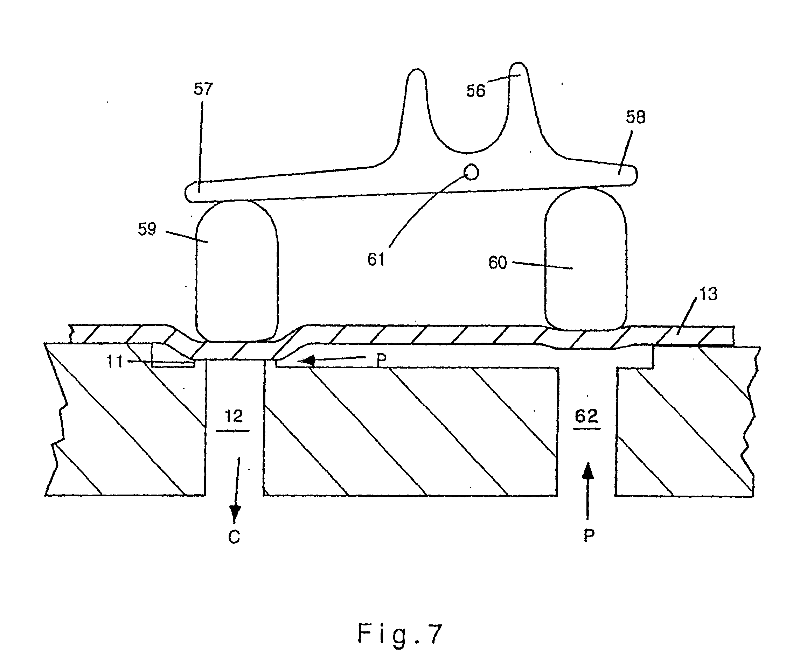

Fig. 7 shows schematically and for the purpose of understanding the invention, an alternative embodiment of the valve 10 having a single valve seating 11 depending from which there is a fluid inlet 12. An unbalanced closure member 56 is provided having first and second ends 57 and 58, respectively for imparting a force to a rubber diaphragm 13, or for receiving a force applied thereby, via corresponding first and second actuators 59 and 60. A pivot axis 61 of the closure member 56 is not at its center, the distance from the first end 57 to the center 61 being twice the distance from the second end 58 thereto. Fluid is continuously applied at a pressure P through a fluid inlet 62 which remains permanently open, so as to apply a pressure P on to the diaphragm 13 and thereby on to the actuator 60.

With the valve open, a pressure P is applied to the lower surfaces of both actuators 59 and 60. If the closure member 56 were balanced (as shown in Figs. 1 and 2), then equal torques proportional to **P.A** would be applied to the closure member, the constant of proportionality being the length ½**L** of the lever arm between the pivot axis 61 and the actuators 59 and 60. The torque thereby required to close the valve would be negligible whilst to open the valve, a torque equal to ½**P.A.L** would be required, where **P** is the fluid pressure, **A** is the cross-sectional area of the actuators and **L** is the total combined length of the two lever arms between the first and second ends 57 and 58 of the closure member 56.

However, with the unbalanced closure member 56 shown in Fig. 7, when the valve is open, the torque applied to closure member 56 by the actuator 59 is twice that which is applied by the actuator 60, owing to the relationship between the two lever arms. In effect, there is therefore applied a constant net opening torque equal to 1/3**P.A.L** which must be overcome in order to close the valve. There is thus required a net closing torque of 1/3**P.A.L** which must be applied to the closure member 56 so as to close the valve. Once the valve is closed, however, the fluid pressure **P** is no longer applied to the actuator 59 and thus the only torque acting on the closure member 56 is the closing torque 1/3**P.A.L** which must be completely overcome by applying a counter torque of equal magnitude to the closure member 56.

It will thus be seen by comparing the two situations for a balanced and unbalanced closure member 56 having an equal length **L**, that for the unbalanced closure member the opening and closing torques are both smaller than the opening torque required for the balanced closure member. It is, of course, true that the closing torque required for the balanced closure member is negligible, but since the size of the motor which is required to rotate the closure member is dependent on the maximum required torque, this means that a smaller, less powerful, motor can be employed for the unbalanced closure member.

Whilst the features of the valve described above with reference to Figs. 1 to 7 of the drawings are of universal application, it is particularly desirable to incorporate these features within a valve such as is typically connected in the water inlet feed of a garden sprinkler and wherein there is provided the further improvement that an electrical motor is provided for effecting opening and closure.

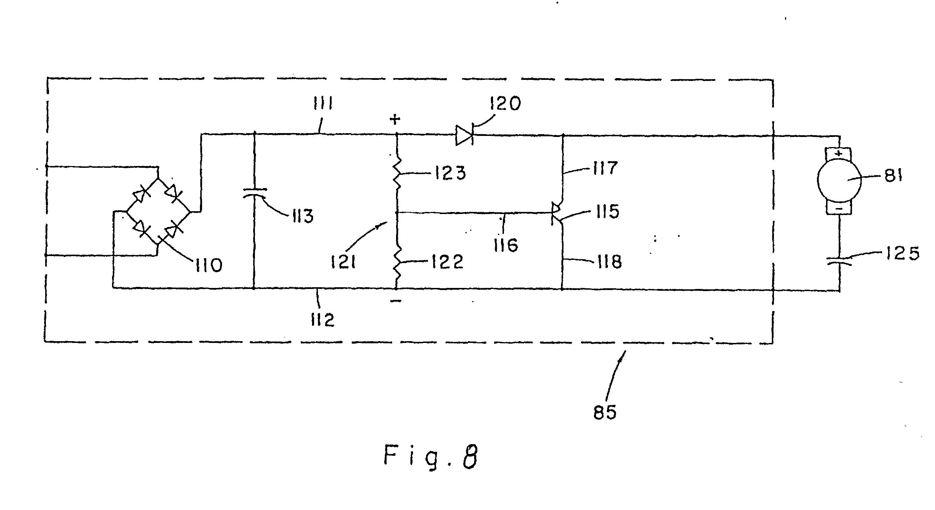

Referring now to Fig. 8 there is shown a first embodiment of a switching circuit 85 for use with any of the electrical valves described in detail above with reference to Figs. 3, 4, 5 or 6 of the drawings.

Thus there is provided a full wave bridge rectifier 110 connected in conventional form to a source of a.c. power (not shown) so as to produce a rectified d.c. output across a positive supply rail 111 and a negative supply rail 112. Connected across the positive and negative supply rails 111 and 112 is a smoothing capacitor 113 for reducing any a.c. ripple associated with the rectified d.c. output of the bridge rectifier 110.

Also connected across the positive and negative supply rails 111 and 112 is a PNP bipolar junction transistor 115 having base, emitter and collector terminals 116, 117 and 118 respectively, connected as a darlington pair. The transistor 115 is connected in common collector configuration such that its collector 118 is connected to the negative supply rail 112 and its emitter terminal 117 is connected to the positive supply rail 111 via a diode 120 so that current can flow from the positive supply rail 111 through the diode 120 and into the collector 118 of the transistor 115 whilst blocking the flow of current through the diode 120 in a reverse direction.

Also connected across the positive and negative supply rails 111 and 112 is a voltage divider depicted generally as 121 and comprising a pair of resistors 122 and 123 a common junction of which is connected to the base 116 of the transistor 115. The values of the resistors 122 and 123 are so chosen that minimal current flows through the voltage divider 121 whilst nevertheless permitting sufficient current to flow into the base 116 of the transistor 115 so as to turn off the PNP transistor 115 thereby substantially eliminating the flow of current from the emitter 117 to the collector 118.

The motor 81 is connected in series with a capacitor 125 the combined motor and capacitor network being connected across the positive and negative supply rails 111 and 112.

The operation of the switching circuit 85 is as follows. When the bridge rectifier 110 is connected to a source of a.c. power, the resulting rectified d.c. voltage appearing across the positive and negative supply rails 111 and 112 renders the PNP transistor 115 open circuit, thereby allowing current to flow through the diode 120 and the motor 81 so as to charge the capacitor 125. At the same time, a small current flows through the voltage divider 121 although, as explained above, the values of the resistors 122 and 123 are chosen such that this leakage current is insignificant.

Owing to the gear ratio between the gear wheel 82 and the gear wheel 105 the motor 81 effects several revolutions before the stop 108 on the gear wheel 105 abuts the plate 110 the time interval during which such rotation of the motor 81 occurs being sufficiently long substantially to fully charge the capacitor 125. Once the capacitor 125 is fully charged, it blocks the flow of d.c. current so that although a voltage remains across the motor terminals, no current actually flows through the motor 81.

On now decoupling the rectifier 110 from the a.c. supply source, no current flows into the base 116 of the transistor 115 and it is therefore turned on, acting as an effective short circuit across the series connected motor 81 and capacitor 125. In this configuration, current flows from the capacitor 125 through the motor 81 in the opposite direction to the original charging current, thereby driving the motor 81 in the reverse direction until the stop 108 on the gear wheel 105 abuts the plate 110 at the opposite extremity thereof.

During such discharge of the capacitor 125 through the motor 81 the diode 120 prevents the discharge current from flowing through the voltage divider 121 thereby ensuring that the rate of discharge of the capacitor 125 is determined only by the collector-emitter impedance of the transistor 115 and the value of the capacitor 125.

In such a configuration, the transistor 115 functions as a normally closed switching element which opens as soon as the bridge rectifier 110 is connected to an a.c. supply source and closes as soon as the base bias voltage is reduced to zero.

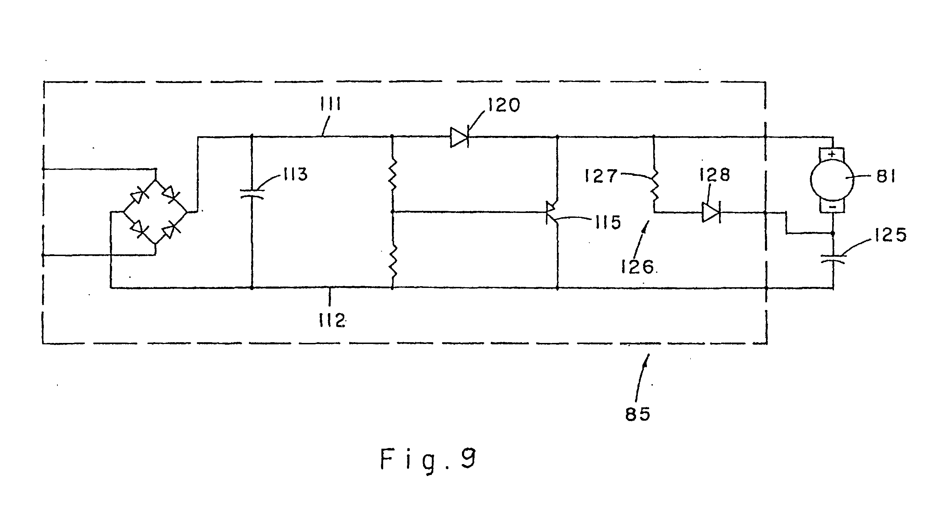

It is desirable that steps are taken to ensure that the capacitor 125 is always substantially fully charged whenever the valve is open or even partially open, so that in the event of a subsequent power failure, for any reason, there is always sufficient charge in the capacitor 125 to drive the motor 81 so as to urge the rod 78 into the closed position as shown in Fig. 9 of the drawings. If, on the contrary, the valve were opened, either wholly or partially, before the capacitor 125 had fully charged and a power failure then occurred, it might possibly happen that there would be insufficient residual charge in the capacitor 125 to rotate the motor 81 through a sufficient number of turns so as to seal the valve completely.

Fig. 9 shows a second embodiment of the switching circuit 85 wherein additional components are included in order to prevent such an occurrence. The switching circuit shown in Fig. 9 is substantially identical to that described above with reference to Fig. 8 with the sole exception of the provision of a secondary charge path 126 connected across the motor 81 and comprising a resistor 127 in series with a diode 128.

When the bridge rectifier 110 is connected to a source of a.c. power, the resulting rectified d.c. voltage across the positive and negative supply rails 111 and 112 renders the transistor 115 open circuit, whilst allowing current to flow through the diode 120 and the motor 81 in series with the capacitor 125 as well as through the secondary charge path 126 and the capacitor 125. Thus, the secondary charge path 126 acts as a by-pass for ensuring that more current flows through the capacitor 125 than flows through the motor 81. By such means, it may be arranged that the capacitor 125 charges at a greater rate than the motor 81 is able to rotate. It may thus be ensured that, even in the event of a power failure during the opening of the valve 10, there is always sufficient residual charge in the capacitor 125 to at least rotate the motor 81 sufficiently so as to restore the sealed state of the valve. The diode 128 ensures that discharge current from the capacitor 125 flows only through the motor 81 and not through the secondary charge path 126.

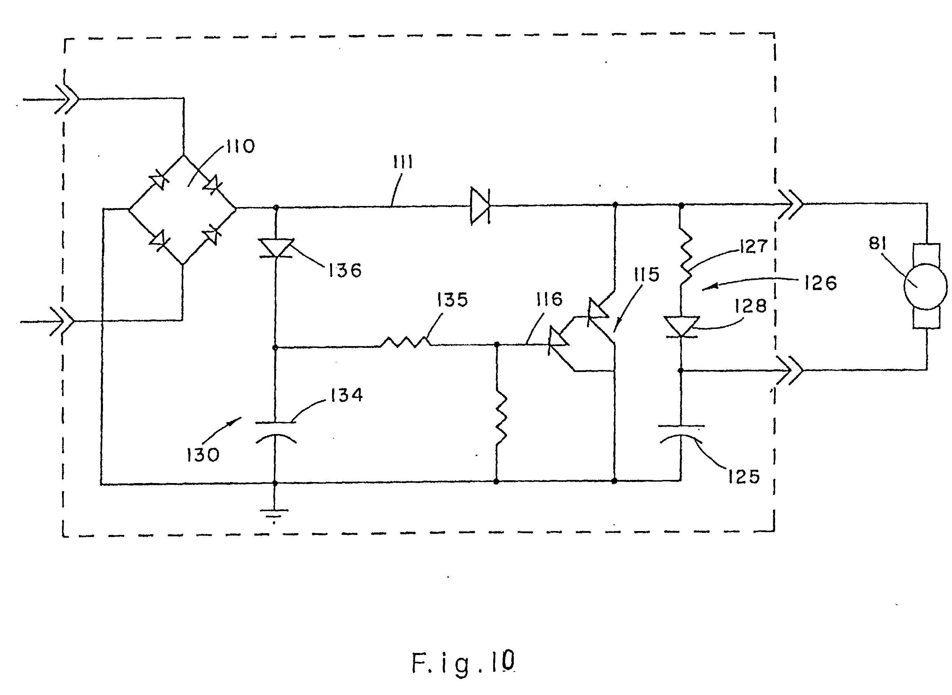

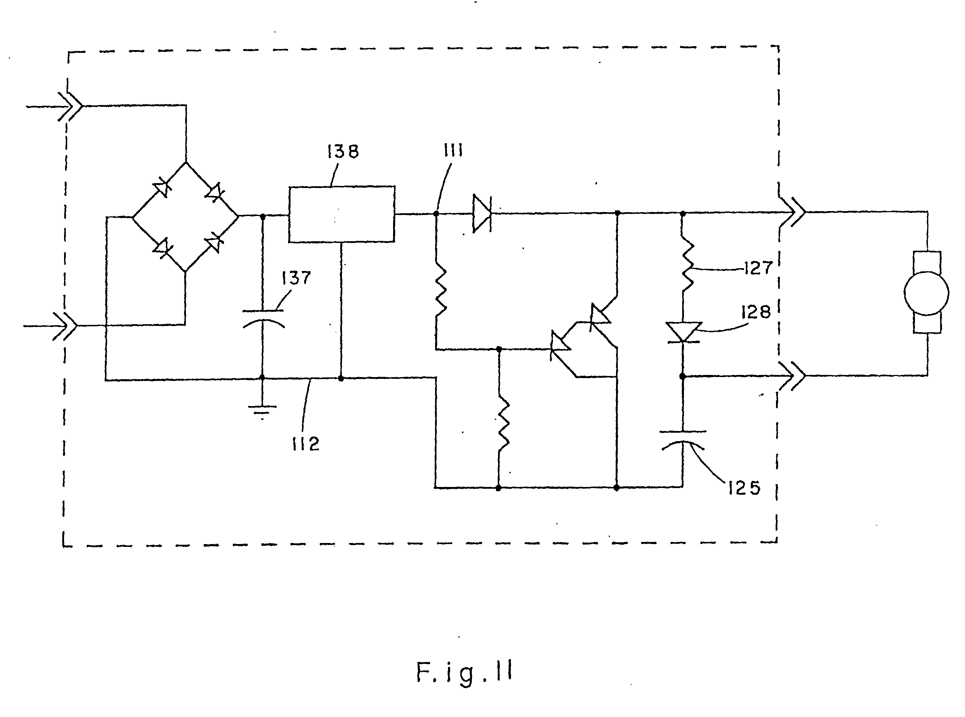

Referring to Fig. 10, there is shown a third embodiment of the switching circuit 85 similar in principle to the second embodiment described above with reference to Fig. 11 of the drawings and therefore identical reference numerals will be used in respect of those circuit elements which are common to both embodiments. As will be seen from Fig. 10, no smoothing capacitor is connected across the positive and negative supply rails rails 111 and 112 respectively and, consequently, the output from the bridge rectifier 110 is a continuous sequence of half sine waves corresponding to the rectified a.c. voltage input. Were such a voltage allowed to appear across the base 116 of the PNP transistor 115 then the transistor would stop conducting current during those periods of the a.c. cycle when the voltage across its base 116 fell below the base threshold voltage V_{T}. This must not be allowed to occur because once the PNP transistor 115 stops conducting (i.e. becomes open circuit) the capacitor 125 will start to conduct through the motor via the secondary path 126 constituted by the resistor 127 in series with the diode 128 thereby rotating the motor 81 and changing the state of the valve. In order to avoid this, the voltage appearing on the base 116 of the PNP transistor 115 must be maintained at least at the base threshold voltage V_{T}.

The third and fourth embodiments shown in Figs. 10 and 11 show alternative ways in which this is achieved. Thus, in Fig. 10 there is provided a small filter designated generally as 130 and comprising a capacitor 134 having one terminal connected to the negative supply rail 112 and having a second terminal connected to the base 116 of the PNP transistor 115 via a resistor 135. The point of connection of the capacitor 134 with the resistor 135 is connected to the positive supply rail 111 via a rectifier diode 136 which allows the passage of current from the positive supply rail 111 through the capacitor 130 to the negative supply rail 112 but does not allow current to flow through the capacitor 130 in a reverse direction.

The circuit operates as follows. As soon as an a.c. voltage supply is connected to the bridge rectifier 110 the capacitor 134 substantially immediately reaches full charge owing to the small time constant of the capacitor/diode combination constituted by the capacitor 134 in series with the rectifier diode 136. Any ripple appearing on the voltage across the capacitor 134 is significantly reduced by the filter 130 such that an acceptably ripple-free voltage appears across the base 116 of the PNP transistor 115 of sufficient magnitude to put the PNP transistor 115 into saturation. At the same time, the capacitor 134 is prevented from discharging to the positive supply rail 111 owing to the rectifier diode 136.

In Fig. 11 a similar arrangement is employed except that instead of using a filter, there is provided a small smoothing capacitor connected across the positive and negative outputs of the bridge rectifier 110 which achieves a small reduction of the ripple appearing across the d.c. rectified voltage although the remaining ripple is still very much greater than that achieved in either of the first or second embodiments both of which employ a comparatively large smoothing capacitor. The positive output of the bridge rectifier 110 is then connected to the positive supply rail 111 through a voltage regulator 138 which reduces the magnitude of the d.c. voltage and, at the same time, regulates it so that the voltage appearing across the positive and negative supply rails 111 and 112 respectively, is substantially constant.

It will be understood that whether a large smoothing capacitor is employed or, alternatively whether a filter or a voltage regulator is employed are questions dictated largely by cost rather than technical considerations. Thus, in the first and second embodiments shown in Figs. 10 and 11, respectively, the smoothing capacitor 113 typically has a value of 1000 µF as compared with the magnitude of the filter capacitor 134 in the third embodiment (Fig. 10) which typically has a value of only 1 µF. On the other hand, the third embodiment requires the additional rectifier diode 136 and the resistor 135. The third embodiment employs a capacitor 137 of intermediate size typically having a value of 4.7 µF but, of course, requires also the regulator 138 which is relatively expensive.

Furthermore, it will be appreciated that a simpler operating mechanism can be employed, albeit with less benefit, so as not to impart an impulse to the, closure member when it is desired to change its state. The gear ratio between the two gear wheels determines the velocity ratio of the transmission system and permits the size of the motor to be reduced. However, where size is not at a premium, a larger motor could, if desired, be coupled directly to the shaft 40, in which case the second gear wheel 39 could be replaced by a pulley having an arcuate slot in a periphery thereof.

It will also be understood that the leaf spring members 55 can be formed of any suitable resilient material, such as metal for example, and riveted or otherwise secured to the armatures of the closure member, as required.

There is further provided the improvement that the valve is operated by an electrical motor and is yet nevertheless completely compatible with existing installations. This is achieved by means of a switching circuit which is responsive to the presence of a voltage across its terminals for opening the valve, whilst the absence of such voltage ensures that the valve is returned to its normally closed state.

It will, however, be appreciated that the switching circuit may easily be modified to allow for the use of a normally open valve which is closed upon removal of the voltage across the supply rails of the switching . circuit.

It will equally well be appreciated that the requirements of the switching circuit may be achieved by equivalent circuit designs well familiar to those skilled in the art.

## Claims

1. A valve arrangement comprising:
a valve casing;
first and second ports formed in said casing;
first and second valve seatings (22, 23) of said first and second ports;
a flexible diaphragm (25);
a first diaphragm surface juxtaposed with respect to said valve seatings;
a second and opposite diaphragm surface;
a closure member (15, 28, 56) mounted in said casing;
first and second actuator elements (26, 27) of said closure members juxtaposed with respect to said second diaphragm surface and being displaceable into first and second positions so as to bear alternately against said second diaphragm surface thereby alternately depressing spaced apart first and second portions of said first diaphragm surface into respective, sealing engagement with said valve seatings thereby alternately sealing off said first and second ports from a fluid flow zone; and
operating drive means operatively coupled to said closure member so as, alternately, to pivotally displace said actuator elements from one to another of said first and second positions so as, alternately, to effect communication between said fluid flow zone and said first and second ports;
and said first diaphragm surface defines with said casing wall said fluid flow zone, said displacement of said actuator elements (26, 27) alternately effecting communication between said fluid flow zone and said first and second ports;
**characterized in that** said closure member (15, 28, 56) is pivotally mounted in said casing, the valve arrangement being such that fluid pressure in said fluid flow zone acts on said first diaphragm surface in a direction tending to assist said pivotal displacement of said actuator elements (26, 27).

2. The valve arrangement according to Claim 1, wherein the closure member (15, 26) is balanced so that when a valve seating is open, an equal torque is applied to opposite ends (14, 18; 30, 31) of the closure member.

3. The valve arrangement according to Claim 1, wherein the closure member (56) is unbalanced so that when a valve seating (11) is open, unequal torques are applied to opposite ends (57,58) of the closure member.

4. The valve arrangement according to Claim 1, wherein the operating means includes an electric motor (36).

5. The valve arrangement according to Claim 4, wherein the electric motor (36) is configured to impart an impulse to the closure member (28) so as to rotate it about a pivot axis (29) thereof and thereby move the actuator elements (26,27) from the first position to the second position, or *vice versa*.

6. The valve arrangement according to Claim 4, wherein the electric motor (36) is coupled to the closure member (28) via a transmission system (35) having a high velocity ratio.

7. The valve arrangement according to Claim 6, wherein the transmission system (35) comprises a first gear wheel (37) connected to an axis (38) of the electric motor (36) and a second gear wheel (39) having a greater number of teeth than the first gear wheel and being coupled to the pivot axis (29) of the closure member (28).

8. The valve arrangement according to Claim 7, wherein the transmission system (35) further includes a crank (50) coupled at a first end (49) thereof to the pivot axis (29) of the closure member (28) and having a second end (51) disposed within an arcuate slot (42) in a periphery of the second gear wheel (39), such that rotation of the second gear wheel causes one of opposing ends (43, 44) of the slot to impinge on the second end of the crank and apply an impulse thereto of sufficient magnitude to rotate the crank and thereby actuater elements (26, 27) respectively to said first or second position.

9. The valve arrangement according to Claim 8, wherein:
the closure member (28) is provided on either side of the pivot axis (29) with an upwardly depending armature (45, 46) defining therebetween a substantially U-shaped hollow (47), and
a cylindrical boss (48) is eccentrically mounted on the first end (49) of the crank (50), said cylindrical boss being disposed between the armatures of the closure member and being dimensioned such that rotation of the crank imposes a lateral force on an inside surface of one of the armatures so as to rotate the closure member about its pivot axis.

10. The valve arrangement according to Claim 9, wherein the electric motor (36) is so configured that when the actuator elements (26, 27) are respectively in either the first or second position said lateral force acts through an axis of rotation of the cylindrical boss (48) so that even if power to the motor is interrupted there is no tendency for counter rotation of the cylindrical boss.

11. The valve arrangement according to Claim 9, further including a pair of resiliently biased leaf spring members (55) within said U-shaped hollow (47) such that an initial rotation of the motor depresses the cylindrical boss against one of the leaf spring members thereby rotating the closure member into the first or second position, whilst continued rotation of the motor causes the cylindrical boss to compress the leaf spring member.

12. The valve arrangement according to Claim 11, wherein the closure member (28) is at least partially formed of molded plastics.

13. The valve arrangement according to Claim 1, wherein the operating means includes:
a source of d.c. electrical power (87),
an electrical d.c. motor (81) coupled to the source of d.c. electrical power and to the flexible diaphragm (13) and responsive to a first polarity voltage pulse for urging the flexible diaphragm into a first position wherein it seals the valve seating (11) and responsive to a second polarity voltage pulse for urging the flexible diaphragm into a second position wherein it is lifted from the valve seating, and
a switching circuit (85) for decoupling the electrical d.c. motor from the source of d.c. electrical power only when it is required to urge the flexible diaphragm from the second position to the first position.

14. The valve arrangement according to Claim 13, wherein the switching circuit (85) comprises:
first and second supply rails (111, 112) having first and second polarities respectively,
a storage element (125) having a first terminal thereof connected to the first supply rail and having a second terminal thereof connected to a first terminal of the motor (81), a second terminal of the motor being connected to the second supply rail,
a normally closed switching element (115) connected across the first and second supply rails, and responsive to a voltage across said supply rails for opening and allowing current to flow through the motor so as to urge the flexible diaphragm (13) into the second position whilst substantially fully charging the storage element (125), whereupon decoupling said voltage from across the supply rails causes the switching element to close thereby providing a discharge path through the motor for the storage element which discharges thereby urging the flexible diaphragm into the first position.

15. The valve arrangement according to Claim 14, wherein the switching element (125) is a PNP bipolar transistor connected in common collector mode.

16. The valve arrangement according to Claim 15, wherein the PNP bipolar transistor is a darlington pair.

17. The valve arrangement according to Claim 15, wherein the switching circuit (85) further includes a secondary charge path (127, 128) connected across the motor for channeling current through the secondary charge path instead of through the motor, whereby the storage element (125) reaches substantially full charge before the flexible diaphragm (13) is urged into the second position so that in the event of a power failure the storage element is sufficiently charged to discharge through the motor and return the flexible diaphragm to the first position.

18. The valve arrangement according to Claim 17, wherein the secondary charge path comprises a resistor (127) connected in series with a diode (128) so as to prevent discharge current flowing back through the secondary charge path and the switching element (115).

19. The valve arrangement according to Claim 14, wherein the storage element is a capacitor (125).

20. The valve arrangement according to Claim 14, wherein the source of d.c. power is derived from a rectified a.c. voltage supply.

## Patentansprüche

1. Ventilanordnung mit:
einem Ventilgehäuse;
ersten und zweiten in diesem Gehäuse ausgebildeten Öffnungen;
ersten und zweiten Ventilsitzen (22, 23) der ersten und zweiten Öffnungen;
einer flexiblen Membran (25);
einer relativ zu den Ventilsitzen benachbarten ersten Membranoberfläche;
einer zweiten und gegenüberliegenden Membranoberfläche;
einem in dem Gehäuse montierten Verschlußelement (15, 28, 56);
ersten und zweiten Aktuatorelementen (26, 27) der Verschlußelemente, die zu der zweiten Membranoberfläche benachbart sind und in erste und zweite Positionen bewegbar sind, um abwechselnd an der zweiten Membranoberfläche anzuliegen und dadurch abwechselnd beabstandete erste und zweite Teile der ersten Membranoberfläche in einen jeweiligen abdichtenden Eingriff mit den Ventilsitzen zu drücken, und dadurch abwechselnd die erste und zweite Öffnung von einem Fluidströmungsbereich abzuriegeln; und
eine Betriebssteuerungseinrichtung, die im Betrieb mit dem Verschlußelement verbunden ist, um die Aktuatorelemente abwechselnd drehend von einer der ersten und zweiten Positionen zur anderen zu bewegen, um abwechselnd eine Verbindung zwischen dem genannten Strömungsbereich und den ersten und zweiten Öffnungen herbeizuführen;
und wobei die erste Membranoberfläche mit der Gehäusewand den Fluidströmungsbereich begrenzt, wobei die Bewegung der Aktuatorelemente (26, 27) abwechselnd die Verbindung zwischen dem Fluidströmungsbereich und den ersten und zweiten Öffnungen herbeiführt;
**dadurch gekennzeichnet, daß** das Verschlußelement (15, 28, 56) drehbar in dem Gehäuse montiert ist, wobei die Ventilanordnung derart ist, daß der Fluiddruck in dem Fluidströmungsbereich auf die erste Membranoberfläche in einer Richtung wirkt, die dazu tendiert, die drehende Bewegung der Aktuatorelemente (26, 27) zu unterstützen.

2. Ventilanordnung nach Anspruch 1, wobei das Verschlußelement (15, 26) ausgewogen ist, so daß an entgegengesetzten Enden (14, 18; 30, 31) des Verschlußelements das gleiche Drehmoment angewendet wird, wenn ein Ventilsitz offen ist.

3. Ventilanordnung nach Anspruch 1, wobei das Verschlußelement (56) nicht ausgewogen ist, so daß an entgegengesetzten Enden (57, 58) des Verschlußelements verschiedene Drehmomente angewendet werden, wenn ein Ventilsitz (11) offen ist.

4. Ventilanordnung nach Anspruch 1, wobei die Betriebseinrichtung einen elektrischen Motor (36) umfaßt.

5. Ventilanordnung nach Anspruch 4, wobei der elektrische Motor (36) so aufgebaut ist, daß er einen Impuls an das Verschlußelement (28) übermittelt, um es um seine Drehachse (29) zu drehen und die Aktuatorelemente (26, 27) dadurch von der ersten Position zu der zweiten Position oder umgekehrt zu bewegen.

6. Ventilanordnung nach Anspruch 4, wobei der elektrische Motor (36) über ein Getriebesystem (35) mit einem hohen Übersetzungsverhältnis mit dem Verschlußelement (28) verbunden ist.

7. Ventilanordnung nach Anspruch 6, wobei das Getriebesystem (35) aufweist: ein erstes Zahnrad (37), das mit einer Achse (38) des elektrischen Motors (36) verbunden ist, und ein zweites Zahnrad (39) mit einer größeren Anzahl von Zähnen als das erste Zahnrad, das mit der Drehachse (29) des Verschlußelements (28) verbunden ist.

8. Ventilanordnung nach Anspruch 7, wobei das Getriebesystem (35) ferner eine Kurbel (50) umfaßt, die an ihrem ersten Ende (49) mit der Drehachse (29) des Verschlußelements (28) verbunden ist, und die ein zweites Ende (51) in einem bogenförmigen Schlitz (42) im Umfang des zweiten Zahnrads (39) derart angeordnet hat, daß eine Drehung des zweiten Zahnrads bewirkt, daß eines der entgegengesetzten Enden (43, 44) des Schlitzes auf das zweite Ende der Kurbel auftrifft und einen Impuls mit ausreichender Größe darauf anwendet, um die Kurbel und dadurch die Aktuatorelemente (26, 27) jeweils in die erste oder zweite Position zu drehen.

9. Ventilanordnung nach Anspruch 8, wobei:
das Verschlußelement (28) auf beiden Seiten der Drehachse (29) einen nach oben weisenden Anker (45, 46) aufweist, der dazwischen einen im wesentlichen U-förmigen hohlen Teil (47) begrenzt, und
eine zylindrische Nocke (48) exzentrisch auf dem ersten Ende (49) der Kurbel (50) montiert ist, wobei die zylindrische Nocke zwischen den Ankern des Verschlußelements angeordnet ist und so bemessen ist, daß eine Drehung der Kurbel eine seitliche Kraft auf eine innere Oberfläche eines der Anker anwendet, um das Verschlußelement um seine Drehachse zu drehen.

10. Ventilanordnung nach Anspruch 9, wobei der elektrische Motor (36) so aufgebaut ist, daß, wenn die Aktuatorelemente (26, 27) jeweils in der ersten oder zweiten Position sind, die besagte seitliche Kraft durch eine Drehachse der zylindrischen Nocke (48) wirkt, so daß es keine Neigung zu einer Gegendrehung der zylindrischen Nocke gibt, selbst wenn der Strom zum Motor unterbrochen wird.

11. Ventilanordnung nach Anspruch 9, die ferner ein Paar elastisch vorgespannter Blattfederelemente (55) in dem U-förmigen hohlen Teil (47) umfaßt, so daß eine anfängliche Drehung des Motors die zylindrische Nocke gegen eines der Blattfederelemente drückt, wodurch das Verschlußelement in die erste oder zweite Position gedreht wird, während eine fortgesetzte Drehung des Motors bewirkt, daß die zylindrische Nocke das Blattfederelement zusammendrückt.

12. Ventilanordnung nach Anspruch 11, wobei das Verschlußelement (28) zumindest teilweise aus Formkunststoff gebildet ist.

13. Ventilanordnung nach Anspruch 1, wobei die Betriebseinrichtung umfaßt:
eine elektrische Gleichspannungsquelle (87),
einen mit der elektrischen Gleichspannungsquelle und der flexiblen Membran (13) verbundenen elektrischen Gleichstrommotor (81), der auf einen Spannungsimpuls mit einer ersten Polarität anspricht, um die flexible Membran in eine erste Position zu zwingen, in der sie den Ventilsitz (11) abdichtet, und der auf einen Spannungsimpuls mit einer zweiten Polarität anspricht, um die flexible Membran in eine zweite Position zu zwingen, in der sie von dem Ventilsitz abgehoben wird, und
einen Umschalt-Schaltkreis (85) zum Entkoppeln des elektrischen Gleichstrommotors von der elektrischen Gleichspannungsquelle, nur dann, wenn es erforderlich ist, die flexible Membran von der zweiten Position in die erste Position zu zwingen.

14. Ventilanordnung nach Anspruch 13, wobei der Umschalt-Schaltkreis (85) aufweist:
erste und zweite Versorgungsschienen (111, 112) mit jeweils ersten und zweiten Polaritäten,
ein Speicherelement (125), von dem ein erster Anschluß mit der ersten Versorgungsschiene verbunden ist und von dem ein zweiter Anschluß mit einem ersten Anschluß des Motors (81) verbunden ist, wobei ein zweiter Anschluß des Motors mit der zweiten Versorgungsschiene verbunden ist,
ein normalerweise geschlossenes Schaltelement (115), das quer zwischen die ersten und zweiten Versorgungsschienen geschaltet ist und auf eine Spannung an diesen Versorgungsschienen anspricht, um sich zu öffnen und den Stromfluß durch den Motor zu ermöglichen, um die flexible Membran (13) in die zweite Position zu zwingen, während das Speicherelement (125) im wesentlichen vollständig aufgeladen wird, woraufhin das Entkoppeln der Spannung zwischen den Versorgungsschienen bewirkt, daß das Schaltelement sich schließt und dadurch einen Entladungsweg durch den Motor für das Speicherelement liefert, welches sich entlädt und dabei die flexible Membran in die erste Position zwingt.

15. Ventilanordnung nach Anspruch 14, wobei das Schaltelement (125) ein pnp-Bipolartransistor ist, der im Kollektormodus zusammengeschaltet ist.

16. Ventilanordnung nach Anspruch 15, wobei der pnp-Bipolartransistor ein Darlington-Paar ist.

17. Ventilanordnung nach Anspruch 15, wobei der Umschalt-Schaltkreis (85) ferner einen sekundären Ladungsweg (127, 128) umfaßt, der quer über den Motor verbunden ist, um Strom durch den sekundären Ladungsweg anstatt durch den Motor zu leiten, wobei das Speicherelement (125) im wesentlichen die volle Ladung erreicht, bevor die flexible Membran (13) in die zweite Position gezwungen wird, so daß das Speicherelement im Falle eines Spannungsversagens ausreichend aufgeladen ist, um durch den Motor entladen zu werden und die flexible Membran in die erste Position zurückzubringen.

18. Ventilanordnung nach Anspruch 17, wobei der sekundäre Weg einen mit einer Diode (128) in Reihe geschalteten Widerstand (127) aufweist, um zu verhindern, daß Entladungsstrom durch den sekundären Ladungsweg und das Schaltelement (115) zurück fließt.

19. Ventilanordnung nach Anspruch 14, wobei das Speicherelement ein Kondensator (125) ist.

20. Ventilanordnung nach Anspruch 14, wobei die Gleichspannungsquelle aus einer gleichgerichteten Wechselspannungsversorgung gewonnen wird.

## Revendications

1. Dispositif de robinet comprenant :
un corps de robinet ;
un premier et un second orifices de passage formés dans ledit corps ;
un premier et un second sièges de robinet (22, 23) desdits premier et second orifices de passage ;
une membrane souple (25) ;
une première surface de membrane juxtaposée avec lesdits sièges de robinet ;
une seconde surface de membrane opposée ;
un élément de fermeture (15, 28, 56) monté dans ledit corps ;
un premier et un second éléments actionneur (26, 27) desdits éléments de fermeture juxtaposés avec ladite seconde surface de membrane et pouvant être déplacés dans une première et une seconde positions de façon à s'appuyer alternativement contre ladite seconde surface de membrane, abaissant ainsi alternativement les première et seconde parties séparées de ladite première surface de membrane vers un emboîtement étanche et respectif avec lesdits sièges de robinet, étanchéifiant ainsi alternativement lesdits premier et second orifices de passage par rapport à une zone d'écoulement du fluide ; et
un moyen d'entraînement opérationnel couplé opérativement audit élément de fermeture de façon à déplacer de manière pivotante et alternativement lesdits éléments actionneurs de l'une à l'autre desdites première et seconde positions de façon à réaliser alternativement une communication entre ladite zone d'écoulement du fluide et lesdits premier et second orifices de passage ;
et ladite première surface de membrane définit avec ladite paroi du corps ladite zone d'écoulement du fluide, ledit déplacement desdits éléments actionneurs (26, 27) réalisant alternativement une communication entre ladite zone d'écoulement du fluide et lesdits premier et second orifices de passage ;
**caractérisé en ce que** ledit élément de fermeture (15, 28, 56) est monté de manière pivotante dans ledit corps, le dispositif de robinet étant de telle sorte que la pression du fluide dans ladite zone d'écoulement du fluide agit sur ladite première surface de membrane dans une direction tendant à assister ledit mouvement de pivotement desdits éléments actionneurs (26, 27).

2. Dispositif de robinet selon la revendication 1, dans lequel l'élément de fermeture (15, 26) est équilibré de telle sorte que, lorsqu'un siège de robinet est ouvert, un couple de torsion égal est appliqué aux extrémités opposées (14, 18 ; 30 , 31) de l'élément de fermeture.

3. Dispositif de robinet selon la revendication 1, dans lequel l'élément de fermeture (56) n'est pas équilibré de telle sorte que, lorsqu'un siège de robinet (11) est ouvert, un couple de torsion inégal est appliqué aux extrémités opposées (57, 58) de l'élément de fermeture.

4. Dispositif de robinet selon la revendication 1, dans lequel le moyen opérationnel comprend un moteur électrique (36).

5. Dispositif de robinet selon la revendication 4, dans lequel le moteur électrique (36) est configuré pour donner une impulsion à l'élément de fermeture (28) de façon à le faire tourner autour d'un axe pivot (29) de celui-ci et déplacer ainsi les éléments actionneurs (26, 27) à partir de la première position vers la seconde position, ou vice-versa.

6. Dispositif de robinet selon la revendication 4, dans lequel le moteur électrique (36) est couplé à l'élément de fermeture (28) par l'intermédiaire d'un système de transmission (35) ayant un grand rapport de transmission.

7. Dispositif de robinet selon la revendication 6, dans lequel le système de transmission (35) comprend une première roue d'engrenage (37) reliée à un axe (38) du moteur électrique (36) et une seconde roue d'engrenage (39) ayant un plus grand nombre de dents que la première roue d'engrenage et reliée à l'axe pivot (29) de l'élément de fermeture (28).

8. Dispositif de robinet selon la revendication 7, dans lequel le système de transmission (35) comprend en outre une manivelle (50) couplée, à sa première extrémité (49), à l'axe pivot (29) de l'élément de fermeture (28) et ayant une seconde extrémité (51) disposée dans une rainure en forme d'arc (42) à la périphérie de la seconde roue d'engrenage (39), de telle sorte que la rotation de la seconde roue d'engrenage fait entrer en contact une des extrémités opposées (43, 44) de la rainure avec la seconde extrémité de la manivelle et appliquer une impulsion d'une amplitude suffisante à celle-ci pour faire tourner la manivelle et donc les éléments actionneurs (26, 27) respectivement vers ladite première ou seconde position.

9. Dispositif de robinet selon la revendication 8, dans lequel :
l'élément de fermeture (28) est muni, de chaque côté de l'axe pivot (29), d'une armature orientée vers le haut (45, 46) définissant un creux globalement en forme de U (47), et
un bossage cylindrique (48) est monté de manière excentrée sur la première extrémité (49) de la manivelle (50), ledit bossage cylindrique étant disposé entre les armatures de l'élément de fermeture et dimensionné de telle sorte que la rotation de la manivelle applique une force latérale sur une surface intérieure d'une des armatures de façon à faire tourner l'élément de fermeture autour de son axe pivot.

10. Dispositif de robinet selon la revendication 9, dans lequel le moteur électrique (36) est configuré de telle sorte que, lorsque les éléments actionneurs (26, 27) sont respectivement soit dans la première soit dans la seconde position, ladite force latérale agit par l'intermédiaire d'un axe de rotation du bossage cylindrique (48) de telle sorte que, même si l'alimentation du moteur est arrêtée, il n'y ait pas de tendance à une contre-rotation du bossage cylindrique.

11. Dispositif de robinet selon la revendication 9, comprenant en outre une paire d'éléments de ressorts à lames précontraints élastiquement (55) à l'intérieur ledit creux en forme de U (47) de telle sorte que qu'une rotation initiale du moteur abaisse le bossage cylindrique contre un des éléments de ressort à lames, faisant ainsi tourner l'élément de fermeture vers la première ou la seconde position, tandis que la rotation continue du moteur fait que le bossage cylindrique comprime l'élément de ressort à lames.

12. Dispositif de robinet selon la revendication 11, dans lequel l'élément de fermeture (28) est constitué au moins partiellement de plastiques moulés.

13. Dispositif de robinet selon la revendication 1, dans lequel le moyen d'actionnement comprend :
une source de courant continu (87)
un moteur électrique à courant continu (81) couplé à la source de courant continu et à la membrane souple (13) et répondant à une impulsion de tension de première polarité pour pousser la membrane souple dans une première position dans laquelle elle assure l'étanchéité du siège du robinet (11) et répondant à une impulsion de tension de seconde polarité pour pousser la membrane souple dans une seconde position dans laquelle elle est soulevée du siège du robinet, et
un circuit de marche/arrêt (85) pour désaccoupler le moteur électrique à courant continu de la source de courant continu seulement lorsqu'il est nécessaire de pousser la membrane souple de la seconde position à la première position.

14. Dispositif de robinet selon la revendication 13, dans lequel le circuit de marche/arrêt comprend :
un premier et un second rails d'alimentation (111, 112) ayant respectivement une première et une seconde polarités,
un élément de stockage (125) ayant une première borne connectée au premier rail d'alimentation et ayant une seconde borne connectée à une première borne du moteur (81), une seconde borne du moteur étant connectée au second rail d'alimentation,
un élément logique normalement fermé (115) connecté en travers du premier et du second rails d'alimentation, et répondant à une tension traversant lesdits rails d'alimentation pour l'ouverture et permettant au courant de passer par le moteur de façon à pousser la membrane souple (13) vers la seconde position tout en chargeant de manière substantiellement pleine l'élément de stockage (125), après quoi le fait de désaccoupler ladite tension des rails d'alimentation provoque la fermeture de l'élément logique, créant ainsi un chemin de décharge dans le moteur pour l'élément de stockage qui se décharge donc en poussant la membrane souple vers la première position.

15. Dispositif de robinet selon la revendication 14, dans lequel l'élément logique (125) est un transistor bipolaire PNP connecté en mode collecteur commun.

16. Dispositif de robinet selon la revendication 15, dans lequel le transistor bipolaire PNP est un couple de Darlington.

17. Dispositif de robinet selon la revendication 15, dans lequel l'élément logique (85) comprend en outre un chemin de charge secondaire (127, 128) connecté à travers le moteur pour canaliser le courant dans le chemin de charge secondaire au lieu de traverser le moteur, l'élément de stockage (125) atteignant substantiellement la pleine charge avant que la membrane souple (13) soit poussée vers la seconde position de telle sorte que, dans le cas d'une défaillance de l'alimentation, l'élément de stockage soit suffisamment chargé pour se décharger dans le moteur et remette la membrane souple dans la première position.

18. Dispositif de robinet selon la revendication 17, dans lequel le chemin de charge secondaire comprend une résistance (127) connectée en série avec une diode (128) de façon à empêcher le courant de décharge de repasser dans le chemin de charge secondaire et dans l'élément logique (115).

19. Dispositif de robinet selon la revendication 14, dans lequel l'élément de stockage est un condensateur (125).

20. Dispositif de robinet selon la revendication 14, dans lequel la source de courant continu est dérivée d'une alimentation de courant alternatif rectifiée.
